Europäisches Patentamt

European Patent Office

Office européen des brevets

(11) Veröffentlichungsnummer: **0 257 373**
**B1**

# EUROPÄISCHE PATENTSCHRIFT

(45) Veröffentlichungstag der Patentschrift:
22.08.90

(51) Int. Cl.⁵: **C01G 23/053**, C01G 23/08

(21) Anmeldenummer: 87111238.9

(22) Anmeldetag: 04.08.87

(54) Verfahren zur Herstellung von Titandioxidpigmenten.

(30) Priorität: 14.08.86 DE 3627655

(43) Veröffentlichungstag der Anmeldung:
02.03.88 Patentblatt 88/9

(45) Bekanntmachung des Hinweises auf die Patenterteilung:
22.08.90 Patentblatt 90/34

(84) Benannte Vertragsstaaten:
BE DE ES FR GB IT NL

(56) Entgegenhaltungen:
EP-A- 0 097 259
US-A- 3 105 744

(73) Patentinhaber: BAYER AG,
D-5090 Leverkusen 1 Bayerwerk(DE)

(72) Erfinder: Bayer, Eckhard, Dr., Grevenbroicher
Strasse 47, D-4150 Krefeld(DE)
Erfinder: Lailach, Günter, Dr., Bodelschwinghstrasse 23,
D-4150 Krefeld(DE)

## Beschreibung

Die Erfindung betrifft ein Verfahren zur Herstellung von $TiO_2$-Pigmenten nach dem Sulfatverfahren durch Aufschluß titanhaltiger Rrohstoffe mit Schwefelsäure, Hydrolyse des dabei gebildeten Titanylsulfats, Reinigung des Hydrolysats und Kalzinierung des gereinigten Hydrolystate in Drehrohröfen.

Nach dem Stand der Technik (US-A 3 105 744) erfolgt die Kalzinierung des gereinigten Hydrolysats, das nach dem Sulfatverfahren erhalten wird, vornehmlich in Drehrohröfen, wobei Produkttemperaturen im Bereich 800 -1100°C erreicht werden. Das Beheizen der Drehrohröfen erfolgt mit Heizöl oder Heizgas und erfordert einen hohen Energieaufwand.

Das Hydrolysat enthält gewöhnlich als unerwünschten Nebenbestandteil 7 - 9 Gew.-% $H_2SO_4$, bezogen auf $TiO_2$. Bei der Kalzinierung entstehen daraus $SO_2$ und $SO_3$ bzw. durch die Reaktion des letzteren mit Wasserdampf $H_2SO_4$. Die aus den Kalzinieröfen austretenden Kalzinierabgase enthalten deshalb außer Wasserdampf, Stickstoff, Sauerstoffm, Kohlendioxid und Staub auch $SO_2$ $SO_3$ bzw. $H_2SO_4$.

Die Eigenschaften der $TiO_2$-Pigment, insbesondere der relative Gehalt der beiden Modifikationen Anatas une Rutil, sowie die Teilchengröße der Pigmentkristalle hängen stark von den Bedingungen der Kalzinierung ab.

Durch Zugabe überschüssiger Luft (Sekundärluft) zu den bei der Verbrennung der Brennstoffe gebildeten Rauchgasen wird die Ausbildung eines bestimmten, für das jeweilige Produkt optimalen Temperaturprofiles im Drehrohrofen bewirkt. Zur Überwachung dieses optimalen Temperaturprofils und damit der Bedingungen der Kalzinierung werden üblicherweise die Produkttemperaturen des entstehenden $TiO_2$-Pigments und/oder die Gastemperaturen im Ofen gemessen und mit vorgegebenen Sollwerten für die jeweils angestrebte Pigmentqualität verglichen. Bei Abweichungen von den Sollwerten werden die Brennstoffmenge und gegebenenfalls die Luftmenge je nach den Erfordernissen erhöht oder erniedrigt.

Es bereitet aber Schwierigkeiten, die Temperaturen in den rotierenden Drehrohröfen exakt zu messen und konstant zu halten.

Die Bedingungen der Kalzinierung müssen deshalb immer wieder angepaßt werden, wenn bei der Untersuchung von Pigmentproben Abweichungen von der angetrebten Qualität festgestellt werden.

Bedingt durch die relativ lange Zeitspanne zwischen der Probennahme und der Anpassung der bedingungen der Kalzinierung sind Schwankungen der Qualität des aus dem Ofen ausgetragenen $TiO_2$-Pigments unvermeidbar.

Auch bei Zurückführung eines Teils der aus den Drehrohröfen austretenden Kalzinierabgase in die Brennkammern gemäß US-A 3 105 744 sind Schwankungen in der Produktqualität des $TiO_2$-Pigments wegen der Trägheit der geschilderten Art der Steuerung der Kalzinierbedingungen unvermeidbar.

Zudem treten bei dieser Verfahrensweise starke Schwankungen des $SO_2$-Gehaltes der Kalzinierabgase auf, was zu Problemen bei der heute notwendigen Entfernung des $SO_2$-Gehaltes der Kalzinierabgase führt, die an die Atmosphäre abgegeben werden.

Die Aufgabe der Erfindung bestand darin, ein besonders vorteilhaftes Verfahren zur Herstellung von $TiO_2$-Pigmenten bereitzustellen, das die oben beschriebenen Nachteile nicht aufweist.

Überraschend wurde nun gefunden, daß die Bedingungen der Kalzinierung über eine Einstellung des $SO_2$-Gehalts der aus den Drehrohröfen austretenden Kalzinierabgase geregelt werden können.

Gegenstand der vorliegenden Erfindung ist somit ein Verfahren zur Herstellung von $TiO_2$-Pigmenten nach dem Sulfatverfahren durch Aufschluß titanhaltiger Rohstoffe mit Schwefelsäure, Hydrolyse des dabei gebildeten Titanylsulfats, Reinigung des Hydrolysats und Kalzinierung des Hydrolysats in Drehrohröfen, welches dadurch gekennzeichnet ist, daß die Bedingungen der Kalzinierung über eine Einstellung des $SO_2$-Gehalts der aus den Drehrohröfen austretenden Kalzinierabgase geregelt werden.

Vorzugsweise wird der $SO_2$-Gehalt der Kalzinierabgase auf einem Wert zwischen 2 und 3,5 g $SO_2/m^3$ konstant gehalten. (Die Angaben für diese und alle im folgenden aufgeführten Gasmengen beziehen sich auf Standardbedingungen).

Der optimale $SO_2$-Gehalt innerhalb des angegebenen Bereichs hängt von den Abmessungen des Drehrohrofens, dem Durchsatz und der geforderten Pigmentqualität ab.

Gegenstand der Erfindung ist ferner ein Verfahren zur Herstellung von $TiO_2$-Pigmenten nach dem Sulfatverfahren durch Aufschluß titanhaltiger Rohstoffe mit Schwefelsäure, Hydrolyse des dabei gebildeten Titanylsufats, Rei nigung des Hydrolysats und Kalzinierung des gereinigten Hydrolysats in Drehrohöfen, welches dadurch gekennzeichnet, ist, daß ein Teil der Kalzinierabgase in die Brenn kammern der Öfen zurückgeführt und die Bedingungen der Kalzinierung über eine Einstellung des $SO_2$-Gehalts der Kalzinierabgase geregelt werden.

Die Bedingungen der Kalzinierung werden dazu in einer Ausführungsform des Verfahrens so gewählt, daß der $SO_2$-Gehalt der Kalzinierabgase auf einem Wert im Bereich von 4 bis 8 g $SO_2/m^3$ konstant bleibt.

Vorzugsweise wird der $SO_2$-Gehalt auf einem konstanten Wert im Bereich von 4 - 7 g $SO_2/m^3$ gehalten.

Der $SO_2$-Gehalt wird vorzugsweise über die Brennstoffzufuhr in den Brennkammern gesteuert. Und zwar wird bei Verminderung des $SO_2$-Gehaltes der Kalzinierabgase unter den jeweiligen Optimalwert die Brennstoffzufuhr erhöht und bei Überschreiten des Optimalwertes verringert. Es ist aber auch möglich, den $SO_2$-Gehalt über andere Parameter, wie beispielsweise die Sekundärmenge, zu steuern, wobei hier erfindungsgemäß die Sekundärluft aus zurückgeführtem Kalzinierabgas bestehen kann.

Erfindungsgemäß werden ein Teil oder vorzugsweise die gesamte Sekundärluft durch zurückgeführte Kalzinierabgase ersetzt. Der Optimalwert hängt von den technischen Parametern der Drehrohröfen, dem Produktdurchsatz, der geforderten produktqualität und der Temperatur und Menge der zurückgeführten Kalzinierabgase ab. In einer bevorzugten Ausführungsform des Verfahrens werden die Kalziniergase vor ihrer Rückführung in die Brennkammern entstaubt und der abgetrennte Staub zusammen mit dem Hydrolysat in die Drehrohröfen eingespeist.

Bei einer vorteilhaften Variante des erfindungsgemäßen Verfahrens werden die 300 - 500°C heißen staubhaltigen Kalzinierabgase in einem Abhitzekessel zur Dampferzeugung auf 200 - 250°C abgekühlt, danach entstaubt und teilweise anstatt Sekundärluft in die Brennkammern der Drehrohröfen eingespeist.

Wenn der Sauerstoffgehalt der Kalzinierabgase über 5 Vol.-% liegt, ist es vorteilhaft, einen Teil der zur Verbrennung der Brennstoffe benötigten Primärluft durch die heißen, entstaubten Kalzinierabgase zu ersetzen.

Durch die Anwendung des erfindungsgemäßen Verfahens ist eine nahezu verzögerungsfreie Kontrolle der Betriebsbedingungen des Drehrohrofens möglich. Dadurch können die Bedingungen der Kalzinierung optimiert und Schwankungen in der Produktqualität vermieden werden.

Bei Rückführung der Kalzinierabgase in die Brennkammern können ohne Verminderung der Produktqualität bis zu 50 % der Kalzinierabgasmenge zurückgeführt und bis zu 30 % der ohne Rückführung der Kalzinierabgase benötigten Energie eingespart werden.

Außerdem kann durch die Einhaltung eines weitgehend konstanten $SO_2$-Gehaltes in den Kalzinierabgasen die erforderliche Anlage zur $SO_2$-Entfernung günstiger dimensioniert und stetiger betrieben werden als bei stark schwankenden $SO_2$-Gehalten der Kalzinierabgase, wie sie sich nach dem Stand der Technik ergeben.

Das erfindungsgemäße Verfahren und dessen Vorteile sollen anhand der folgenden Beispiele verdeutlicht werden.

Vergleichsbeispiel

In einem Erdgas-beheizten Drehrohrofen wird durch Kalzinieren von Titanoxidhydrat-Filterkuchen, der mit Rutilisierungskeimen, Alkali und Mineralisatoren versetzt wurde, Rutilpigment erzeugt. Als entscheidender Parameter für die Erzielung einer bestimmten Pigmentqualität (Soll: Rutilisierung 99 - 100 %) wurde die Produkttemperatur $T_1$ kurz vor dem Austrag des Rutilpigments aus dem Ofen gewählt. Die Einstellung des Temperaturprofils über die Ofenlänge erfolgte durch Zugabe von Sekundärluft (60°C). Mit der Produkttemperatur $T_1$ als Regelgröße wurde die Erdgasmenge gesteuert. Der Sollwert von $T_1$ sollte im Bereich 935 - 940°C liegen, um optimale Pigmentqualität zu erhalten. Wegen der Probleme der Produkt-Temperaturmessung im rotierenden Ofen und des großen Einflusses der Temperatur auf die Pigmentqualität mußte der Sollwert von $T_1$ immer verändert werden, wenn die Eigenschaften der untersuchten Pigmentproben von den Standardwerten abwichen. Effektiv wurde die Solltemperatur zwischen 915 -980°C variiert. Der Rutilisierungsgrad schwankte zwischen 98 un 100 %, fiel aber gelegentlich bis auf 90 % ab. Entsprechend variierten das Aufhellvermögen zwischen 580 und 680, der Graufarbstich zwischen 2,3 und 4,8. Bei einem Durchsatz von 4,7 t $TiO_2$/h betrug der Erdgasverbrauch 1380 m³/h, was einem spezifischen Erdgasverbrauch von 294 m³ / t $TiO_2$ entspricht.

Der $SO_2$-Gehalt in den Ofenabgasen schwankte zwischen 1,7 und 4,3 g/m³.

Beispiel 1

Bei der Produktion von Rutilpigment analog dem Vergleichsbeispiel wurde der $SO_2$-Gehalt der Ofenabgase kontinuierlich gemessen. Der Sollwert der Produkttemperatur $T_1$ wurde nicht aufgrund von Abweichungen der Produktprobequalität von der Standardprobequalität (deren Ermittlung eine zeitliche Verzögerung bedingt) verstellt, sondern so verstellt, daß der $SO_2$-Gehalt in den Ofenabgasen bei 2,8 ± 0,2 g/m³ gehalten wurde. Infolge dieser neuartigen Prozeßsteuerung ergaben sich nur geringe Temperaturschwankungen (940 ± 10°C) und die Produktqualität war wesentlich einheitlicher als nach der herkömmlichen Art der Steuerung. Der Rutilisierungsgrad lag zwischen 99,4 und 99,8 %, das Aufhellvermögen zwischen 645 und 660, der Graufarbstich zwischen 3,3 und 3,5.

Außerdem wurden bei 4,7 t $TiO_2$/h Durchsatz nur 1285 m³ Erdgas/h verbraucht, was einem spezifischen Erdgasverbrauch von 273 m³ / t $TiO_2$ entspricht.

Beispiel 2

Bei dem Kalzinierprozeß entsprechend Beispiel 1 wurde zwecks Energieersparnis die Ca. 60°C warme Sekundärluft durch 380 - 450°C heiße Ofenabgase ersetzt.

Dabei wurden 20 % des Abgases nach einer Entstaubung zur Brennkammer zurückgeführt. Da mit den Kalzinierabgasen auch $SO_2$ zurückgeführt wurde, errechnete sich als opti maler $SO_2$-Gehalt der Ofenabgase unter diesen Betriebsbedingungen ein Wert von 3,8 g/m³. Bei 940 - 950°C und ca. 3,8 g $SO_2$/m³ Abgas wurden aber Pigmente mit viel zu geringem Rutilisierungsgrad erhalten. Versuche, den vermeintlich optimalen $SO_2$-Gehalt einzuhalten und die Produktqualität an die Standardqualität anzugleichen, führten zu schwankenden $SO_2$-Gehalten und stark schwankender Produktqualität:
Rutilisierungsgrad 80 - 100 %
Aufhellvermögen 530 - 680
Graufarbstich 1,8 - 4,8
Der spezifische Erdgasverbrauch lag bei 246 m³ / t $TiO_2$.

Beispiel 3

Bei Betrieb des Kalzinierofens unter Rückführung von 20 % der Kalzinierabgase zur Brennkammer anstatt Einspeisung von Sekundärluft konnte ein stationärer Betriebszustand mit optimaler Produktqualität und minimalem Erdgasverbrauch erst erreicht werden, als die Produkttemperatur $T_1$ bei 980 ± 10°C so eingestellt wurde, daß der $SO_2$-Gehalt der Ofenabgase zwischen 4,9 und 5,2 $g/m^3$ (und damit weit über dem Erwartungswert) lag. Bei einem Durchsatz von 4,8 t/h ergab sich ein ruhiger Ofenbetrieb mit gleichmäßiger Produktqualität:

Rutilisierungsgrad 99,5 - 99,9 %
Aufhellvermögen 675 - 690
Graufarbstich 3,3 - 3,5
Der spezifische Erdgasverbrauch lag bei nur 226 $m^3$ / t $TiO_2$.

**Patentansprüche**

1. Verfahren zur Herstllung von $TiO_2$-Pigmenten nach dem Sulfatverfahren durch Aufschluß titanhaltiger Rohstoffe mit Schwefelsäure, Hydrolyse des dabei gebildeten Titanylsulfats, Reinigung des Hydrolysats und Kalzinierung des gereinigten Hydrolysats in Drehrohröfen, dadurch gekennzeichnet, daß die Bedingungen der Kalzinierung über eine Einstellung des $SO_2$-Gehalts der aus den Drehrohröfen austretenden Kalzinierabgase geregelt werden.

2. Verfahren nach Anspruch 1, dadurch gekennzeichnet, daß der $SO_2$-Gehalt der Kalzinierabgase auf einem Wert im Bereich von 2 bis 3,5 g $SO_2/m^3$ konstant gehalten wird.

3. Verfahren nach Anspruch 1, dadurch gekennzeichnet, daß ein Teil der Kalzinierabgase in die Brennkammern der Öfen zurückgeführt wird.

4. Verfahren nach Anspruch 3, dadurch gekennzeichnet, daß der $SO_2$-Gehalt der Kalzinierabgase auf einem Wert im Bereich von 4 bis 8 g $SO_2/m^3$ konstant gehalten wird.

5. Verfahren nach Anspruch 3 oder 4, dadurch gekennzeichenet, daß der $SO_2$-Gehalt der Kalzinierabgase auf einem Wert im Bereich 4 - 7 g $SO_2/m^3$ konstant gehalten wird.

6. Verfahren nach einem der Ansprüche 1 bis 5, dadurch gekennzeichnet, daß der $SO_2$-Gehalt der Kalzinierabgase über die Brennstoffzufuhr in die Brennkammern gesteuert wird.

7. Verfahren auch einem der Ansprüche 3 bis 6, dadurch gekennzeichnet, daß die Kalzinierabgase vor der Rückführung in die Brennkammern entstaubt werden und der abgetrennte Staub zusammen mit dem Hydrolysat in die Drehrohröfen eingespeist wird.

8. Verfahren auch einem der Ansprüche 3 bis 7, dadurch gekennzeichnet, daß Kalzinierabgase in Abhitzekesseln zur Dampferzeugung auf 200 - 250°C gekühlt, danach entstaubt und zum Teil in die Brennkammern der Drehrohröfen zurückgeführt werden.

**Revendications**

1. Procédé pour la fabrication de pigments de $TiO_2$ par le procédé au sulfate avec attaque de matières premières titanifères par l'acide sulfurique, hydrolyse du sulfate de titanyle ainsi formé, purification du produit d'hydrolyse et calcination du produit d'hydrolyse purifié dans des fours tubulaires rotatifs, caractérisé en ce que les conditions de la calcination sont réglées par l'intermédiaire d'un réglage de la teneur en $SO_2$ des gaz résiduaires de calcination sortant des fours rotatifs tubulaires.

2. Procédé selon la revendication 1, caractérisé en ce que la teneur en $SO_2$ des gaz résiduaires de calcination est maintenue constante à un niveau dans l'intervalle de 2 à 3,5 g de $SO_2/m^3$;

3. Procédé selon la revendication 1, caractérisé en ce que l'on recycle une partie des gaz résiduaires de calcination dans les chambres de combustion des fours.

4. Procédé selon la revendication 3, caractérisé en ce que la teneur en $SO_2$ des gaz résiduaires de calcination est maintenue constante à une valeur dans l'intervalle de 4 à 8 g de $SO_2/m^3$.

5. Procédé selon la revendication 3 ou 4, caractérisé en ce que la teneur en $SO_2$ des gaz résiduaires de calcination est maintenue constante à une valeur dans l'intervalle de 4 à 7 g de $SO_2/m^3$.

6. Procédé selon l'une des revendications 1 à 5, caractérisé en ce que la teneur en $SO_2$ des gaz résiduaires de calcination est réglée par l'intermédiaire de l'alimentation en combustible des chambres de combustion.

7. Procédé selon l'une des revendications 3 à 6, caractérisé en ce que les gaz résiduaires de calcination sont dépoussiérés avant recyclage dans les chambres de combustion et les poussières séparées sont envoyées avec le produit d'hydrolyse dans les fours rotatifs tubulaires.

8. Procédé selon l'une des revendications 3 à 7, caractérisé en ce que les gaz résiduaires de calcination sont refroidis à un niveau de 200 à 250°C dans des chaudières à récupération de chaleur pour production de vapeur d'eau puis dépoussiérés et recyclés en partie dans les chambres de combustion des fours rotatifs tubulaires.

**Claims**

1. A process for the production of $TiO_2$ pigments by the sulfate method by digestion of titanium-containing raw materials with sulfuric acid, hydrolysis of the titanyl sulfate formed, purification of the hydrolyzate and calcination of the purified hydrolyzate in rotary kilns, characterized in that the calcination conditions are regulated by adjustment of the $SO_2$ content of the waste calcination gases issuing from the rotary kiln.

2. A process as claimed in claim 1, characterized in that the $SO_2$ content of the waste calcination gases is kept constant at a value of 2 to 3.5 g $SO_2/m3$.

3. A process as claimed in claim 1, characterized in that the waste calcination gases are partly returned to the combustion chambers of the kilns.

4. A process as claimed in claim 3, characterized in that the $SO_2$ content of the waste calcination gases is kept constant at a value of 4 to 8 g $SO_2/m3$.

5. A process as claimed in claim 3 or 4, characterized in that the $SO_2$ content of the waste calcination gases is kept constant at a value of 4 to 7 g $SO_2/m3$.

7  EP 0 257 373 B1

6. A process as claimed in any of claims 1 to 5, characterized in that the $SO_2$ content of the waste calcination gases is controlled through the supply of fuel to the combustion chambers.

7. A process as claimed in any of claims 3 to 6, characterized in that the waste calcination gases are freed from dust before being returned to the combustion chambers and the dust removed is fed into the rotary kiln together with the hydrolyzate.

8. A process as claimed in any of claims 3 to 7, characterized in that the waste calcination gases are cooled to 200 to 250°C in waste heat boilers for generating steam, freed from dust and partly returned to the combustion chambers of the rotary kilns.